## Europäisches Patentamt
## European Patent Office
## Office européen des brevets

(19)

(11) Numéro de publication: **0 349 355**
**A1**

# DEMANDE DE BREVET EUROPEEN

(12)

(21) Numéro de dépôt: **89401047.9**

(22) Date de dépôt: **17.04.89**

(51) Int. Cl.5: **C 08 G 12/22**

(30) Priorité: **29.04.88 FR 8805744**

(43) Date de publication de la demande:
**03.01.90 Bulletin 90/01**

(84) Etats contractants désignés:
**AT BE CH DE ES FR GB GR IT LI LU NL SE**

(71) Demandeur: **NORSOLOR S.A.**
**Tour Aurore - Cédex 5 18, place des Reflets**
**F-92080 Paris la Defense 2 (FR)**

(72) Inventeur: **Garrigue, Roger**
**23, rue du Capitaine Escudié**
**F-31000 Toulouse (FR)**

**Lalo, Jack**
**116, avenue St Exupéry**
**F-31400 Toulouse (FR)**

(74) Mandataire: **Rieux, Michel**
**NORSOLOR Service Propriété Industrielle Tour Aurore**
**18, Place des Reflets Cedex no. 5**
**F-92080 Paris la Défense 2 (FR)**

The title of the invention has been amended (Guidelines for Examination in the EPO, A-III, 7.3).

(54) **Additifs convenant dans les résines aminoplastes.**

(57) - Nouveaux additifs acryliques de l'urée constitués de précondensats d'urée et de formol contenant du monométhylolacrylamidométhylène-urée. - Procédé de fabrication de nouveaux additifs à partir acrylamidométhylène urée pur, et de précondensat urée-formol ou des produits de départ utilisés pour la fabrication d'acrylamidométhylène-urée avec du formol.
- Applications des additifs dans les résines aminoplastes.

# Description

## NOUVEAUX ADDITIFS CONVENANT DANS LES RESINES AMINOPLASTES

La présente invention concerne de nouveaux additifs convenant dans les résines aminoplastes, elle concerne en particulier de nouveaux additifs acryliques dérivés de l'urée.

On connait déjà des dérivés acryliques de l'urée. Les composés acryliques utilisés comme produits de départ sont le plus souvent l'acrylamide et l'acrylonitrile. C'est ainsi qu'on a proposé la polycondensation de l'urée, du formol et de l'acrylamide en milieu faiblement alcalin en vue de préparer des produits méthylolés suivi de l'addition de styrène ou d'acrylate de méthyle (voir en particulier KOSTYUKOV et al- URSS 277, 550, 3 juin 1970). On a aussi proposé la préparation de dérivés acryliques de l'urée à partir de méthacrylamide, de formol et d'urée (voir demande française 85 06 106). On a aussi décrit un nouveau procédé de fabrication d'acrylamido méthylène-urée (voir demande 85 06 103 déposée par la demanderesse) qui consiste à faire réagir dans une prémière étape l'acrylamide sur le formol en milieu basique en vue d'obtenir la monométhylolacrylamide puis dans une seconde étape à faire réagir ce dernier composé sur de l'urée en milieu acide.

On décrit dans la demande française déposée ce même jour par la Demanderesse sous le titre "Nouveau dérivé acrylique de l'urée" un produit nouveau de formule :

$$CH_2 = CH - \underset{\underset{O}{\|}}{C} - NH - CH_2 - NH - \underset{\underset{O}{\|}}{C} - NH - CH_2OH$$

qui est le monométhylacrylamidométhylène urée. La Demanderesse a maintenant trouvé de nouveaux produits à base de monométhylolacrylamidométhylène-urée permettant de mettre en oeuvre ce dérivé acrylique sous une forme telle qui ne nécessite pas sa séparation du milieu réactionnel.

La présente invention concerne de nouveaux additifs acryliques dérivés de l'urée caractérisées en ce qu'ils sont constitués de précondensats d'urée et de formol contenant du monométhylolacrylamidométhylène-urée.

Les nouveaux additifs objets de l'invention conviennent particulièrement comme additifs dans les résines aminoplastes en particulier dans les résines urée-formol utilisées comme colles à bois.

Les nouveaux additifs de l'invention sont préparés selon deux modes opératoires. Selon un premier mode opératoire on utilise un dispositif constitué de deux réacteurs disposés l'un au dessus de l'autre. Dans le réacteur supérieur on prépare l'acrylamidométhylène urée en phase aqueuse selon le mode opératoire décrit dans la demande française 8506103 déposée par la Demanderesse, qui consiste à faire réagir de l'acrylamide, de l'urée et du formol. Dans le réacteur inférieur on ajoute une solution de formol avec un inhibiteur tel que l'éther méthylique de l'hydroquinone, puis on rajoute le contenu du réacteur supérieur constitué de la suspension d'acrylamidométhylène-urée. Cette addition est réalisée par fraction à une température de 90°C. Selon un second mode opératoire du procédé objet de l'invention on met en oeuvre l'acrylamidométhylène-urée pur préparé par exemple selon la demande française 8506103 que l'on ajoute à un précondensat urée-formol en présence d'un inhibiteur à pH voisin de 7,5 et à une température d'environ 70°C : la réaction est poursuivie jusqu'à dissolution totale de l'acrylamidométhylène-urée.

Selon l'invention la préparation des précondensats d'urée et du formol contenant du monométhylolacrylamidométhylène-urée est réalise en mettant en oeuvre des quantités de réactifs telles que l'on dispose dans le milieu réactionnel de 0,1 à 4 moles d'acrylamidométhylène-urée pour 4 moles d'urée et entre 16 et 24 moles de formol. Les précondensats d'urée et de formol mis en oeuvre sont des produits connus : ils contiennent de l'urée et du formol dans des rapports molaires $\frac{F}{U}$ compris entre 4 et 6.

Les nouveaux additifs objet de l'invention sont utilisés dans les résines aminoplastes. Leur mise en oeuvre permet d'obtenir des résines qui conviennent particulièrement pour la fabrication de panneaux à base de bois. Ils sont utilisés tel quel après leur préparation sans qu'il soit nécessaire de séparer et purifier le monométhylolacrylamidométhylène urée du mélange réactionnel.

Les exemples suivants illustrent la présente invention.

## Exemple 1

On dispose de deux réacteurs l'un au dessus de l'autre, le réacteur supérieur possède une double enveloppe. Les réacteurs sont munis de dispositif d'agitation et de chauffage.

Dans le réacteur supérieur, on réalise la synthèse de l'acrylamidométhylène-urée. On introduit dans ce réacteur 90,8 g de formol à 37 %, 80 g d'eau, 200 mg d'éther méthylique de l'hydroquinone et 79,4 g d'acrylamide.

Le milieu réactionnel est chauffé 30 minutes à 50°C, le pH étant maintenu à 8,5 par addition de soude.

Après refroidissement du mélange à 15°C, on ajoute 212,8 g d'urée, puis 44 $cm^3$ d'une solution concentrée d'acide chlorhydrique. Le milieu réactionnel est chauffé 2 heures à 40°C. Après refroidissement à 20°C, on neutralise le milieu réactionnel par addition de 8 $cm^3$ d'une solution de soude à 50°C. On rajoute 1,5 $cm^3$ d'une solution de soude à 10 % (pH = 8,06). Dans le réacteur du bas on additionne à 522 g d'une solution aqueuse de formol à 70 %, 200 mg de l'éther méthylique de l'hydroquinone. On verse le contenu du réacteur supérieur dans le réacteur du bas par fraction à une température de 90°C : l'opération est réalisée en 30 minutes. La solution obtenue est refroidie lentement, elle est limpide.

## Exemple 2

Dans un réacteur on introduit 60 g d'acrylamidométhylène-urée pure, 120 mg de l'éther méthylique de l'hydroquinone et 350 g d'un précondensat urée-formol préparé à partir d'une solution de formol à 49 % et d'une solution d'urée à 20 %. On maintient le pH du milieu réactionnel à 7, 5 et la réaction est conduite à 70°C jusqu'à solubilisation de l'acrylamidométhylène-urée.

Exemple 3

A une résine urée-formol on ajoute 20 % en poids de précondensat urée-formol contenant du monométhylolacrylamidométhylène-urée.

Le tableau suivant indique les caractéristiques de la résine ainsi que les propriétés des panneaux particules fabriqués avec cette résine. Les panneaux ont été réalisés dans les conditions suivantes :

- Encollage : 7 % résine sèche/copeaux secs
- Epaisseur panneau : 16 mm
- Pressage : Pression : 30 daN/cm$^2$
  Température : 180 °C
  Temps de pression constante : 4 minutes

Les caractéristiques des panneaux ont été réalisés selon les normes suivantes :

- Teneur en formol (perforateur) : Norme EN 120
- Epaisseur, masse volumique : Norme NFB 51 222
- Traction V 20 : Norme NFB 51 250
- Gonflement % : Norme NFB 51 252

TABLEAU

| Résine | |
|---|---|
| Viscosité mPa.s | 280 |
| extrait sec ( % ) | 65.7 |
| temps de gel à 80°C (secondes) | 145 |
| tolérance à l'eau (20°C) | 5/1 |
| Panneaux | |
| Gonflement 24 heures eau froide ( % ) | 13.6 |
| Absorption % (pour masse volumique 600 kg/m$^3$) | 65.6 |
| Traction N/mm$^2$ | 0.57 |
| Formol (perforateur) iode mg/100 g de copeaux secs | 8.3 |
| Humidité % | 6.5 |

Revendications

1. Nouveaux additifs acryliques dérivés de l'urée caractérisés en ce qu'ils sont constitués de précondensats d'urée et de formol contenant du monométhylolacrylamidométhylène-urée.

2. Procédé de fabrication des nouveaux additifs selon 1, caractérisé en ce qu'on prépare de l'acrylamidométhylène urée à partir d'acrylamide, d'urée et de formol et on fait réagir l'acrylamidométhylène-urée obtenu avec du formol.

3. Procédé de fabrication des nouveaux additifs selon 1, caractérisé en ce qu'on fait réagir de l'acrylamidométhylène urée avec un précondensat urée formol à pH voisin de 7,5.

4. Procédé selon 2 ou 3 caractérisé en ce que la quantité des réactifs mise en oeuvre est telle que l'on dispose dans le milieu réactionnel de 0,1 à 4 moles d'acrylamidométhylène urée pour 4 moles d'urée et entre 16 et 24 moles de formol.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,Y | EP-A-0 202 976 (SOCIETE CHIMIQUE DES CHARBONNAGES S.A.) * Résumé * --- | 1 | C 08 G 12/22 |
| D,Y | EP-A-0 201 386 (SOCIETE CHIMIQUE DES CHARBONNAGES) * Résumé * --- | 1 | |
| Y | FR-A- 827 059 (I.G. FARBENINDUSTRIE) * Résumé; exemples 6,8 * --- | 1 | |
| Y | CHEMICAL ABSTRACTS, vol. 85, no. 26, 26 décembre 1976, page 32, résumé no. 193563x, Columbus, Ohio, US; & PL-A-78 231 (POLITECHNIKA WARSZAWSKA) 10-09-1975 * Résumé * --- | 1 | |
| Y | CHEMICAL ABSTRACTS, vol. 76, no. 8, 21 février 1972, page 23, résumé no. 34886c, Columbus, Ohio, US; & JP-A-71 28 785 (ARAKAWA FOREST CHEMICAL INDUSTRIES LTD) 20-08-1971 * Résumé * ----- | 1 | DOMAINES TECHNIQUES RECHERCHES (Int. Cl.4) C 08 G |

Le présent rapport a été établi pour toutes les revendications

| Lieu de la recherche | Date d'achèvement de la recherche | Examinateur |
|---|---|---|
| LA HAYE | 20-09-1989 | STIENON P.M.E. |